(19) 

Europäisches Patentamt
European Patent Office
Office européen des brevets

(11) **EP 3 490 237 A1**

(12) **EUROPÄISCHE PATENTANMELDUNG**

(43) Veröffentlichungstag:
**29.05.2019 Patentblatt 2019/22**

(51) Int Cl.:
*H04N 1/04* (2006.01)    *G01N 21/59* (2006.01)
*G01N 21/25* (2006.01)

(21) Anmeldenummer: **17001928.5**

(22) Anmeldetag: **23.11.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Viramed Biotech AG**
**82152 Planegg (DE)**

(72) Erfinder:
• **Kintrup, Martin**
**82131 Gauting (DE)**

• **Kronsteiner, Lilly**
**82152 Planegg (DE)**
• **Marcour, Karin**
**82234 Wessling (DE)**
• **Hoffmann, Jan**
**80639 München (DE)**
• **Scheide, Dierk**
**82110 Germering (DE)**

(74) Vertreter: **Grünecker Patent- und Rechtsanwälte PartG mbB**
**Leopoldstraße 4**
**80802 München (DE)**

(54) **VORRICHTUNG UND VERFAHREN ZUR PARALLELEN AUSWERTUNG MEHRERER TESTFLÄCHEN**

(57)    Die vorliegende Erfindung betrifft ein Verfahren zur schnellen, reproduzierbaren und kostengünstigen Identifizierung und/oder Quantifizierung mehrerer, verschiedener in einer Probe enthaltenen Zielsubstanzen durch Bindung an verschiedene, für die jeweilige Zielsubstanz spezifische Fängersubstanzen, die in Form einer adressierbaren zweidimensionalen Anordnung räumlich begrenzter Testflächen auf einem opaken Träger immobilisiert sind, wobei sich dieser Träger auf dem Boden einer Mikrotiterplattenkavität befindet.

Abb. 5

EP 3 490 237 A1

**Beschreibung**

Die vorliegende Erfindung betrifft ein <u>Verfahren</u> zur schnellen, reproduzierbaren und kostengünstigen Identifizierung und/oder Quantifizierung mehrerer, verschiedener in einer Probe enthaltenen Zielsubstanzen durch Bindung an verschiedene, für die jeweilige Zielsubstanz spezifische Fängersubstanzen, die in Form einer adressierbaren zweidimensionalen Anordnung räumlich begrenzter Testflächen auf einem opaken Träger immobilisiert sind, wobei sich dieser Träger auf dem Boden einer Mikrotiterplattenkavität befindet.

Die vorliegende Erfindung betrifft auch eine <u>Vorrichtung</u> zur Identifizierung und/oder Quantifizierung, die auf dem oben beschriebenen Verfahren beruht und welche die Identifizierung und/oder Quantifizierung von Testflächen mit gebundenen Zielsubstanzen auf einem opaken Träger auf dem Boden einer Mikrotiterplattenkavität ermöglicht.

Die vorliegende Erfindung betrifft auch die <u>Verwendung</u> der oben beschriebenen Vorrichtung zur Identifizierung und/oder Quantifizierung von Testflächen mit gebundenen Zielsubstanzen auf einem opaken Träger auf dem Boden einer Mikrotiterplattenkavität.

**Hintergrund der Erfindung und Stand der Technik**

Molekulare Wechselwirkungen zwischen Liganden und Bindungspartnern werden vielfältig genutzt, um Informationen über unbekannte Proben zu erhalten. Hierzu zählen unter anderem - ohne hierbei begrenzend zu wirken - die Wechselwirkung zwischen zwei Strängen von Nukleinsäuremolekülen, zwischen einem Antigen und einem Antikörper oder zwischen einem Liganden und seinem Bindungspartner. Die Wechselwirkungen lassen beispielsweise Rückschlüsse darüber zu, ob der Spender einer biologischen Probe in Kontakt mit einem Erreger gekommen ist.

Zum Nachweis von Antikörpern werden beispielsweise verschiedene Antigene auf einem Träger immobilisiert und der Träger wird mit einer biologischen Probe in Kontakt gebracht. Enthält die biologische Probe Antikörper gegen ein auf dem Träger immobilisiertes Antigen, so binden diese Antikörper und bilden einen Antigen-Antikörperkomplex auf dem Träger. Der Antigen-Antikörperkomplex wird dann beispielsweise durch einen zweiten Antikörper nachgewiesen, der in der Lage ist, an den Antigen-Antikörperkomplex zu binden und gleichzeitig ein messbares Signal zu erzeugen. Messbare Signale können unter anderem sichtbare Farbe, Emission von Fluoreszenz- oder Chemilumineszenzlicht bzw. Radioaktivität, etc. sein. Entsprechend weist der zweite Nachweisantikörper eine Komponente auf, die solche messbaren Signale erzeugen kann. Hierzu zählen Enzyme, die nach Zugabe geeigneter Chemikalien einen sichtbaren Farbstoff oder eine Chemilumineszenz erzeugen. Der zweite Nachweisantikörper kann aber beispielsweise auch mit einer fluoreszierenden Gruppe gekoppelt sein um ein entsprechendes Fluoreszenzsignal zu erzeugen.

Ebenso können beispielsweise verschiedene Antikörper auf einem Träger immobilisiert werden, die jeweils spezifisch gegen ein Antigen eines Erregers gerichtet sind. Wird der Träger nun mit einer biologischen Probe in Kontakt gebracht, die Antigene enthält gegen die ein auf dem Träger immobilisierter Antikörper gerichtet ist, so binden diese Antigene und bilden einen Antikörper-Antigenkomplex auf dem Träger. Der Nachweis dieses Antikörper-Antigenkomplexes erfolgt dann analog zum oben beschriebenen Antikörpernachweis mit Hilfe eines zweiten Nachweisantikörpers.

Verallgemeinert können Fängersubstanzen jeder Art auf einem Träger immobilisiert werden, die jeweils spezifisch gegen eine Zielsubstanz gerichtet sind. Wird der Träger nun mit einer Probe in Kontakt gebracht, die eine oder mehrere der o.g. Zielsubstanzen enthält, so binden diese Zielsubstanzen an den jeweiligen spezifischen Fänger an derjenigen Stelle des Trägers, an der dieser Fänger zuvor immobilisiert wurde. Der Nachweis des Fänger-Zielsubstanz-Komplexes erfolgt dann durch ein zusätzliches Nachweisreagenz. Dieses Nachweisreagenz liefert zum einen ein in irgendeiner Form messbares Signal, beispielsweise optisch, magnetisch, elektrisch o.ä. und zwar entweder direkt (z.B. Fluoreszenzemission nach Lichtanregung) oder indirekt (z.B. Farbstoffpräzipitat nach chemischer Reaktion mit einer weiteren Substanz, wobei die chemische Reaktion durch das Nachweisreagenz katalysiert wird oder z.B. Schwingungsanregung von Festkörpern um piezoelektrische Vorgänge hervorzurufen). Zum anderen interagiert das Nachweisreagenz spezifisch mit dem Fänger-Zielsubstanz-Komplex, beispielsweise indem es selbst direkt an die Zielsubstanz bindet. Möglich sind aber auch umgekehrt indirekte Verfahren, bei denen das Nachweisreagenz an den Fänger binden kann und mit der Zielsubstanz um die Fängersubstanzen konkurriert.

In allen bis hierher genannten speziellen oder verallgemeinerten Verfahren werden Informationen über unbekannte Proben erhalten, indem auf einem Träger an vordefinierten Positionen messbare Signale erzeugt werden.

Es sind zahlreiche Lesegeräte bekannt, die beispielsweise Informationen über Farbe, Fluoreszenz oder Chemilumineszenz liefern können. Im einfachsten Fall liefert das Lesegerät eine einzige Information pro Probe, ein gebildeter Farbstoff wird beispielsweise als optische Dichte bei einer Absorptionswellenlänge gemessen.

In neueren Tests wird zunehmend versucht, gleichzeitig in einer Nachweisreaktion mehrere verschiedene Bindungsereignisse und damit Zielsubstanzen nachzuweisen. Hierzu gibt es aufwändige Techniken, bei denen ein separates Signal für jede Zielsubstanz dadurch erzeugt wird, dass pro Zielsubstanz ein eigener, miniaturisierter Träger verwendet wird, an den die entsprechende Fängersubstanz gekoppelt ist. Für die parallele Nachweisreaktion werden dann die verschiedenen miniaturisierten Träger mit der Probe inkubiert, sodass in der Probe vorhandene Zielsubstanzen gegebenenfalls durch die entsprechende Fängersubstanz am jeweiligen Träger gebunden werden. Die Zielsubstanz wird über die Fängersubstanz identifiziert, welche wiederum über den jeweiligen Träger addressierbar sein muss. Daher müssen die Träger eindeutig voneinander unterscheidbar sein. Die Vielzahl nebeneinander vorliegender Träger wird dann beispielsweise in EP0852004 durch eine Kombination aus Durchflusszytometrie und Fluoreszenzmessung analysiert, wobei insgesamt drei verschiedene Fluoreszenzmessungen erforderlich sind, um zum einen den jeweiligen Träger zu addressieren und zum anderen den Fänger:Zielsubstanz-Komplex nachzuweisen. Dieses Verfahren ist aufwändig, fehleranfällig, zeitintensiv und teuer. Unter anderem besteht bei einer Mischung aus verschiedenen Trägern die Gefahr von Wechselwirkungen zwischen den Trägern bzw. zwischen den jeweils gekoppelten Fängersubstanzen untereinander.

Im Gegensatz dazu gibt es vorteilhaftere Techniken, bei denen der Mehrfachnachweis auf einem einzigen Träger erfolgt, indem verschiedene Fängersubstanzen auf einem einzigen Träger immobilisiert werden. Damit trotzdem unterschieden werden kann, an welche dieser Fängersubstanzen eine Zielsubstanz aus der zu untersuchenden Probe gebunden hat, müssen diese Fängersubstanzen wiederum eindeutig adressierbar sein, was in diesem Fall über ihre diskrete Position auf dem Träger gelingt. Adressierbare zweidimensionale Anordnungen räumlich begrenzter Testflächen auf einem Träger erlauben einen Mehrfachnachweis in einem miniaturisierten Format. Im Beispiel von Antigenen als Fängersubstanz, die gegebenenfalls in einer Probe vorhandene Antikörper als Zielsubstanz binden können, sind die unterschiedlichen einzelnen Antigene als räumlich begrenzte Testflächen zweidimensional auf dem Träger angeordnet. Testflächen sind beispielsweise - jedoch ohne Einschränkung anderer Formen - Kreisflächen.

Soll nun wie oben beschrieben beispielsweise die Anwesenheit eines Antigen-Antikörperkomplexes durch sichtbare Färbung einer solchen Testfläche detektiert werden, steigen die Anforderungen an ein Lesegerät erheblich an, wenn parallel mehrere Testflächen erfasst und als unabhängige Signale ausgegeben werden sollen. Das Lesegerät muss nun pro Probe jeweils ein Signal pro Testfläche liefern. Bei einer zweidimensionalen Anordnung von beispielsweise 8 Testflächen in einer Richtung und 8 Testflächen in der zweiten, hierzu senkrechten Dimension ergeben sich 64 Testflächen mit jeweils einer Färbung und einem zugehörigen Signal.

Hieraus ergibt sich das Erfordernis, die Färbung diskreter, miniaturisierter Testflächen auf einem Träger ortsaufgelöst zu erfassen, typischerweise durch ein zweidimensionales Bild des Trägers. Die Bildaufnahme erfordert sowohl eine Beleuchtung als auch eine Bilderfassung, die auf die Art der sichtbaren Färbung, insbesondere auf die Absorption des Farbstoffes, abgestimmt ist.

Weiterhin muss das Bild eine ausreichende Auflösung besitzen, so dass die einzelnen Testflächen statistisch aussagekräftig ausgewertet werden können.

Diese Anforderungen können durch kommerziell verfügbare Flachbettscanner erfüllt werden.

Flachbettscanner basieren hauptsächlich entweder auf einem sog. Charge-Coupled-Device (CCD) oder auf einem sog. Contact Image Sensor (CIS). Beschreibungen hierzu finden sich beispielsweise in DE2508115 bzw. WO9013963 für den CCD-Scanner und in US6072602 für den CIS-Scanner. US6965460 beschreibt eine völlig andere Erfindung, fasst aber beispielsweise ebenfalls den Stand der Technik für Flachbettscanner zusammen. Bei Flachbettscannern, wird die Gesamt-Optik aus Beleuchtungssystem, optischem System und Sensor bewegt und das abzubildende Objekt ist statisch (z.B. DE69211776T2). Es sind aber auch andere Scanner bekannt, bei denen das Objekt bewegt wird und die Optik statisch ist (z.B. US5140443).

CIS-basierte Flachbettscanner verwenden sog. Gradienten-Index (GRIN) Linsen. Hierbei handelt es sich um transparente optische Bauteile mit einem über eine Richtung abnehmenden Brechungsindex, die wie eine Sammellinse wirken. Der abnehmende Brechungsindex kann durch einen Konzentrationsgradienten von Ionen, z.B. Thallium, Silber/Lithium innerhalb des Linsenmaterials erreicht werden. GRIN Linsen besitzen an den Lichtein- und Lichtaustrittsseiten plane Oberflächen und sind damit besser miniaturisierbar als klassische Linsen und ideal zum Einbau in Scanner oder Kopierer. Das GRIN Linsen-Array in einem Flachbettscanner hat dieselbe Breite wie die gesamte Scanfläche, sodass das Bild nicht verkleinert werden muss. Die Pixelgröße liegt somit bei etwa 5-10 $\mu$m und auch großformatige Scan-Objekte können gut abgebildet werden. Oft wird jedoch nicht ein einzelner Sensor mit der vollen Scanbreite verwendet, sondern es werden stattdessen mehrere kürzere Einzelsensoren nebeneinander verbaut. Dies führt zu Lücken im Bild von etwa 40 $\mu$m. Nachteilig bei vielen CIS-basierten Flachbettscannern ist ihre geringe Tiefenschärfe im Bereich von etwa 100-300 $\mu$m, wobei spezielle, neuere Ausführungen mittlerweile einen Tiefenschärfebereich von +/- 500 $\mu$m erreichen können.

CCD-basierte Flachbettscanner verwenden eine klassische optische Linse, die die volle Scanfläche (> 600 cm$^2$ z.B. DIN A4 oder DIN A3) auf einen CCD-Chip mit Dimensionen von wenigen Zentimetern abbildet. Im Gegensatz zu CIS-basierten Flachbettscannern wird das Bild also verkleinert. Vorteilhaft bei CCD-basierten Flachbettscannern ist allerdings ihre im Vergleich zu CIS-basierten Flachbettscannern größere Tiefenschärfe von 1-2 mm bereits bei Standardgeräten.

Adressierbare zweidimensionale Anordnungen räumlich begrenzter Testflächen auf einem starren, ebenen Träger in der Art eines Objektträgers können schnell und mit hoher Bildauflösung durch beide Arten von Flachbettscannern erfasst werden.

Solche ebenen Träger in der Art eines Objektträgers sind allerdings schwieriger automatisiert zu prozessieren, wenn diese Prozessierung eine Inkubation mit Flüssigkeiten umfasst.

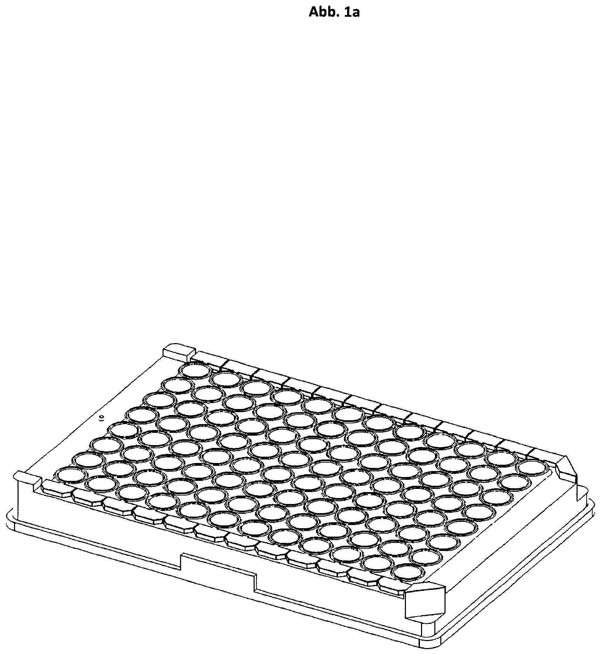

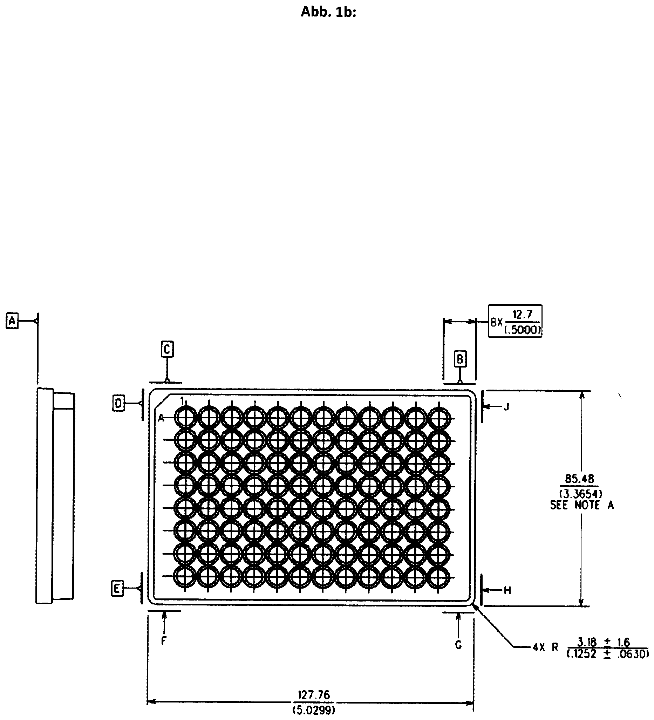

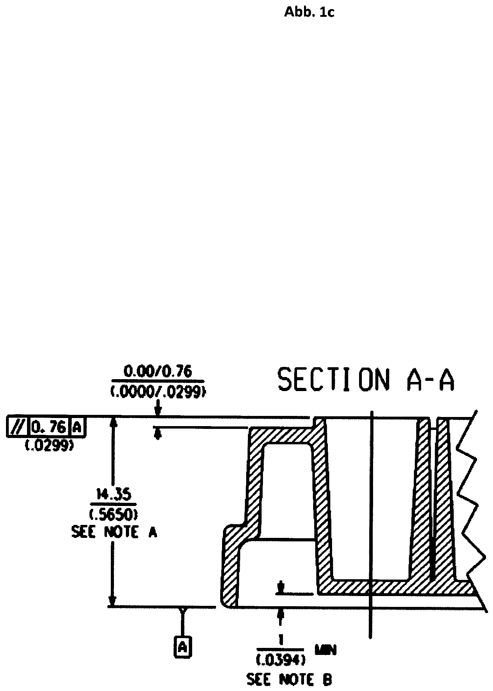

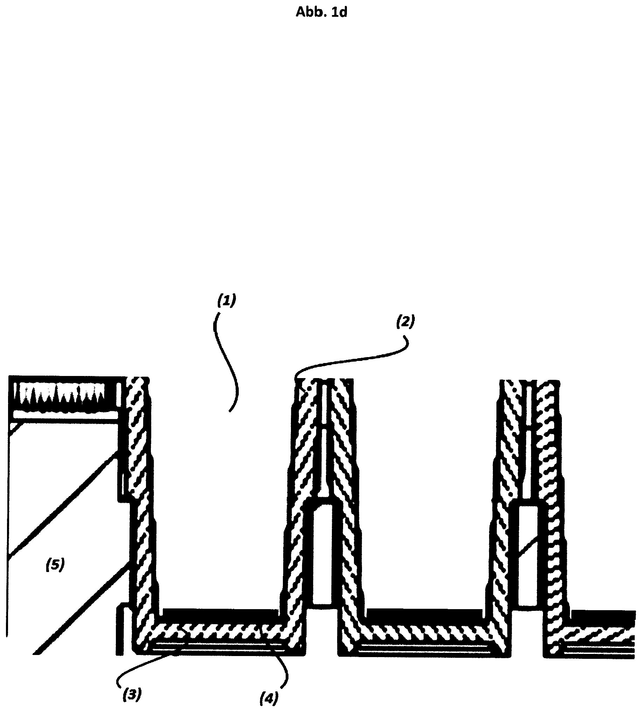

Aus diesem Grund werden moderne Routinetests mit adressierbaren zweidimensionalen Anordnungen räumlich begrenzter Testflächen (z.B. ViraChip®) in die Kavitäten von Mikrotiterplatten (Abb. 1 a,b,c,d) integriert und können vollautomatisch prozessiert werden. Mikrotiterplatten können von einer Vielzahl von voll- oder teilautomatischen Geräten verwendet werden, z.B. für Pipettierung, Dispensierung, Absaugung von Flüssigkeiten, weil sie standardisierte Abmessungen besitzen (127,76 mm × 85,48 mm × 14,35 mm). Weit verbereitet im Bereich der Diagnostik sind Mikrotiterplatten mit 96 Kavitäten, die in einem 8 x 12 Raster mit einem Rasterabstand von 9 mm angeordnet sind (ANSI_SBS 2004, http://www.slas.org/resources/information/industry-standards/). Jede dieser Kavitäten fasst typischerweise ein Volumen von 0,1-0,3 ml. Es gibt jedoch auch 8 x 12 Mikrotiterplatten die bei gleicher Grundfläche wesentlich höher sind (mehrere cm) und die entsprechend 1,0 ml und mehr Volumen aufnehmen können. Dem Fachmann sind weitere Standard-Mikrotiterplatten bekannt:

**Tabelle 1:** Standard Mikrotiterplatten

| Anzahl Kavitäten | 6 | 12 | 24 | 48 | 96 | 384 | 1536 |
|---|---|---|---|---|---|---|---|
| Raster | 2x3 | 3x4 | 4x6 | 6x8 | 8x12 | 16x24 | 32x48 |

Zur Auswertung solcher Routinetests mit adressierbaren zweidimensionalen Anordnungen räumlich begrenzter Testflächen auf einem Träger (= abzubildendes Element) am Boden der Kavität einer Mikrotiterplatte (= dreidimensionales Objekt, in dem sich das abzubildende Element befindet) wird beispielsweise ein Lesegerät wie der ViraChip Reader® verwendet. Bei dem ViraChip Reader® handelt es sich um ein Lesesystem, das mit Hilfe eines XYZ-Positioniersystems Einzelbilder jeder Mikrotiterplattenkavität aufnimmt. Hierbei wird eine Mikrotitertplatte unter einer Bildaufnahmeeinrichtung so positioniert, dass der Träger bzw. das abzubildende Element am Boden der Kavität vollständig erfasst wird. Die Optik der Bildaufnahmeeinrichtung stellt zusammen mit der Z-Komponente des Positioniersystems sicher, dass die Bildebene der Testflächen auf dem Träger im Fokus ist und scharf abgebildet wird.

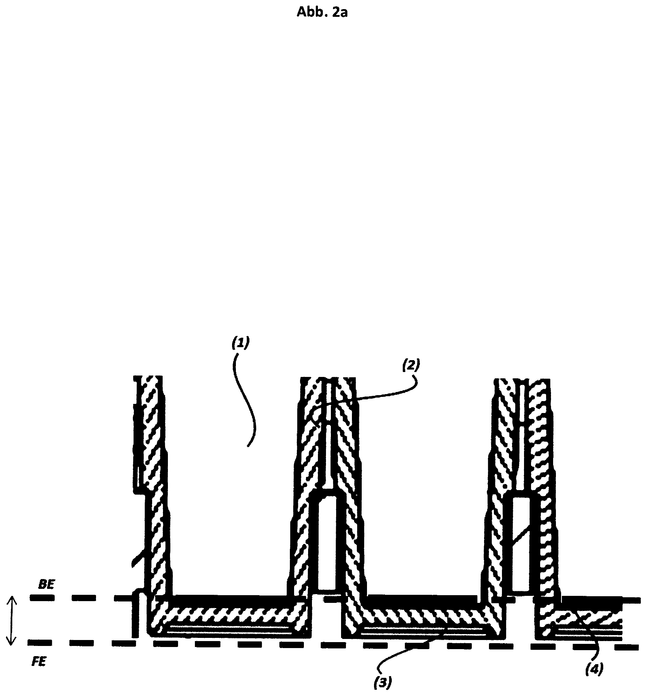

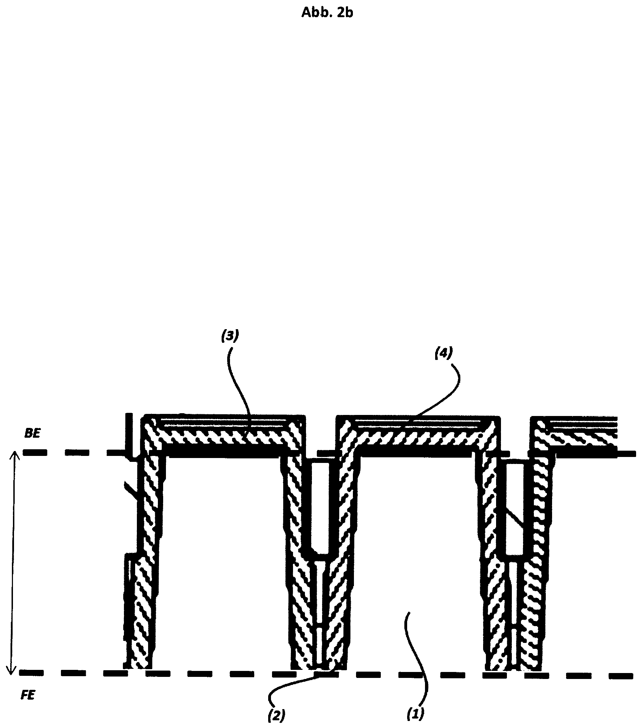

Die technisch einfachere und kostengünstigere Methode der Auswertung mittels Flachbettscanner ist auch auf Mikrotiterplatten anwendbar, sofern der Boden der Mikrotiterplattenkavität und der Träger transparent sind. In diesem Falle kann die Tiefenschärfe eines CCD-basierten Standard-Flachbettscanners oder eines speziellen CIS-basierten Flachbettscanners ausreichend sein, um die Testflächen auf der Oberseite des Trägers am Boden der Mikrotiterplattenkavität abzubilden (Abb. 2a). Ist der Boden der Mikrotiterplattenkavität dagegen nicht transparent, muss die Platte (bzw. alternativ der Flachbettscanner) zunächst gedreht werden und das Bild von der geöffneten Seite der Mikrotiterplattenkavität her aufgenommen werden. Dadurch liegt der Boden der Mikrotiterplattenkavität um die Bauhöhe der Mikrotiterplatte (in einem Bereich um 10 mm) über der Fokusebene (=Glasplatte) des Flachbettscanners. Dieser Abstand überschreitet auch die Tiefenschärfe eines CCD-basierten Flachbettscanners deutlich (Abb. 2b).

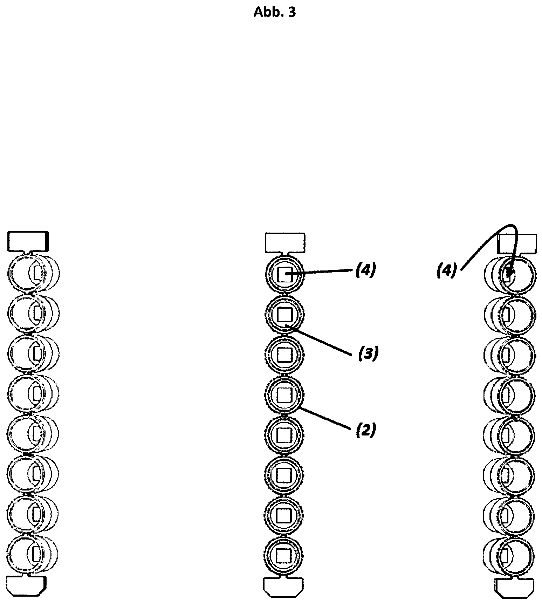

Für Mikrotiterplattenkavitäten mit nicht-transparentem Boden tritt selbst innerhalb des Tiefenschärfebereiches bei CCD-basierten Flachbettscannern zusätzlich das Problem auf, dass der Blickwinkel durch die Abbildungsverkleinerung der Linse verändert wird. So wird eine Mikrotiterplattenkavität in der Mitte des Scanbereiches als unverzerrte 90°-Aufsicht abgebildet (Abb. 3, Mitte), während mit zunehmendem Abstand von der Mitte (in Richtung der Sensorlänge bzw. Scanbreite) eine Ansicht mit immer stärker verändertem Blickwinkel resultiert. Dies führt dazu, dass Teile des Bodens der Mikrotiterplattenkavität nicht erfasst werden und stattdessen Teile der Wände der Mikrotiterplattenkavität abgebildet werden (Abb.3, rechts bzw. links). Einige Testflächen auf dem Träger am Boden der Mikrotiterplattenkavität können dann nicht mehr erfasst und ausgewertet werden.

Weiterhin wird die Ausleuchtung der Mikrotiterplattenkavitäten durch die vorhandenen Wände von Kavitäten und Halterahmen beeinträchtigt. Beleuchtung und Abbildung sind nicht koaxial, sondern leicht versetzt, weil sich Lichtquelle und Linse + Sensor baulich nicht am selben Ort befinden können ("nacheilende Lichtquelle"). Hieraus resultieren optische Effekte wie beispielsweise Reflexionen, Bündelungen, Abschattungen die den Träger am Boden der Mikrotiterplattenkavität an unterschiedlichen Stellen sowohl abdunkeln als auch aufhellen können. Testflächen auf dem Träger am Boden der Mikrotiterplattenkavität können somit im Bild unterschiedlich hell oder dunkel erscheinen, obwohl ihr kolorimetrisches Signal identisch ist. Der Rückschluss auf die Menge von Zielsubstanzen in einer analysierten Probe wird somit verfälscht.

Eine Aufgabenstellung ist somit die Bereitstellung einer Flachbettscanner-basierten Vorrichtung bzw. eines entsprechenden Verfahrens zur schnellen, reproduzierbaren, kostengünstigen digitalen Analyse von molekularen Wechselwirkungen zwischen Zielsubstanzen und Fängersubstanzen, durch die Abbildung einer adressierbaren zweidimensionalen Anordnung räumlich begrenzter Testflächen, die die Fängersubstanzen enthalten, auf einem nicht-transparenten / opaken Träger, wobei sich dieser Träger am Boden einer Mikrotiterplattenkavität befindet.

Kommerziell verfügbare Flachbettscanner weisen diesbezüglich folgende Probleme auf:

(1) Eine Bildebene, die mehr als 2 mm über der bauseitigen Fokusebene (=Glasplatte) des Scanners liegt kann nicht scharf abgebildet werden.

(2) Liegt diese Bildebene innerhalb der Kavitäten einer Mikrotiterplatte, so können handelsübliche Scanner - sofern sie grundsätzlich überhaupt fokussieren können und keinen Festfokus besitzen - diese Bildebene nicht selbsttätig fokussieren, weil die Fläche des Kavitätenbodens zu klein ist (und die Wände in einer anderen Fokusebene liegen).

(3) Liegt die genannte Bildebene innerhalb der Kavitäten einer Mikrotiterplatte, ist weiterhin das Blickfeld aus Sicht der Scanneroptik durch die Kavitätenwände unterbrochen. Je weiter sich eine Kavität am Rande der Scannerbreite bzw. Sensorlänge befindet, desto stärker wird die Bildebene am Boden der Kavität durch die Wände der Kavität verdeckt.

(4) Eine Bildebene innerhalb der Kavitäten einer Mikrotiterplatte wird ungleichmässig beleuchtet, sobald sich die Wände der Kavitäten oder Wände des Mikrotiterplattenhalterahmens oder Teile davon im Lichtweg befinden. Außerdem ist auch die Beleuchtung mancher Scanner auf die bauseitige Fokusebene (=Glasplatte) fokussiert, sodass die Beleuchtung sich mit dem Abstand von der Glasplatte verändert. Insgesamt resultieren hieraus sowohl partielle Abdunkelung durch Schattenwurf, als auch partielle Aufhellung durch Lichtreflexionen.

Die vorliegende Erfindung stellt Vorrichtungen und Verfahren sowie Verwendungen bereit, die die oben skizzierte Aufgabenstellung bewältigen und die genanten Probleme lösen.

Beispielsweise betrifft die Erfindung Verfahren zur schnellen, reproduzierbaren und kostengünstigen Identifizierung und/oder Quantifizierung mehrerer, verschiedener in einer Probe enthaltenen Zielsubstanzen durch Bindung an verschiedene, für die jeweilige Zielsubstanz spezifische Fängersubstanzen, wobei die Fängersubstanzen in Form einer adressierbaren zweidimensionalen Anordnung räumlich begrenzter Testflächen auf einem opaken Träger immobilisiert sind, wobei sich dieser Träger auf dem Boden einer Mikrotiterplattenkavität befindet.

Die vorliegende Erfindung betrifft auch Vorrichtungen zur Identifizierung und/oder Quantifizierung, welche die Identifizierung und/oder Quantifizierung von Testflächen mit gebundenen Zielsubstanzen auf einem opaken Träger auf dem Boden einer Mikrotiterplattenkavität ermöglichen.

Die vorliegende Erfindung ist auch darüberhinaus verallgemeinerbar und anwendbar auf Verfahren und Vorrichtungen, mit deren Hilfe einzelne signal-liefernde Elemente abgebildet und ausgewertet werden können, auch und gerade dann, wenn sich diese Elemente im Inneren eines dreidimensionalen Objektes befinden, wobei das dreidimensionale Objekt nicht von allen Richtungen einen uneingeschränkten Blick auf die abzubildenden signalliefernden Elemente zulässt. Beispiele für solche Objekte sind Testgefäße im Allgemeinen, Teströhrchen, jede Art von Kavitäten, Mikrotiterplatten, Riegel oder Einzelnäpfe von Mikrotiterplatten, Objekte die dreidimensionale Kavitätssysteme wie Kanäle enthalten bis hin zu mikrofluidischen Kapillarsystemen, Objekte die dreidimensionale Leiterbahnstrukturen wie mehrschichtige Platinen enthalten.

## Zusammenfassung der Erfindung

Bereitgestellt werden insbesondere:

1. Ein Flachbettscanner, umfassend eine transparente Ebene in der Scanebene oder Fokusebene, wobei die transparente Ebene mindestens eine Öffnung oder Aussparung aufweist.

"Öffnung" und "Aussparung" sind im Rahmen dieser Erfindung insofern gleichwertige Begriffe, als in allen Ausführungsformen, in denen "Öffnung" verwendet wird auch "Aussparung" angedacht ist und umgekehrt.

Ein Flachbettscanner ist ein Bilderfassungsgerät, das nach dem gleichen Prinzip wie ein Kopiergerät arbeitet. Die zu scannende Vorlage wird auf eine transparenten Ebene, z.B. eine Glasscheibe oder Glasplatte gelegt, sie bleibt immer am gleichen Platz. Lichtempfindliche Sensoren werden während des Abtastens unter der transparenten Ebene, z.B. der Glasscheibe oder Glasplatte, entlanggeführt. Diese Methode erlaubt es, neben Fotos und Bildern auch sperrige Vorlagen wie Bücher abzutasten. Um ein scharfes Bild zu erreichen, muss die Vorlage ganz flach auf der transparenten Ebene aufliegen. Das abzubildende Material wird bevorzugt mit der zu scannenden Seite nach unten auf die transparente Ebene gelegt.

Zum Scannen fährt eine Beleuchtungs- und Abtasteinheit in einem "Bett" unter dieser transparenten Ebene durch, ähnlich wie die Scaneinheit in einem digitalen Fotokopierer. Die X-Achse des Flachbettscanners liegt parallel zu dieser Fahrbewegung und wird auch bezeichnet als "Scanrichtung", "Vorschubrichtung", "Längsrichtung", "Scannerlänge", "Bildlänge". In der Regel wird die Abtasteinheit auf einer Achse entlang der transparenten Ebene in X-Richtung verfahren.

Die Abtasteinheit selber nimmt in der Regel die Vorlage zeilenweise auf, wobei die Zeile in der Regel senkrecht zur X-Achse liegt. Die Y-Achse des Flachbettscanners liegt somit parallel zu dieser Zeile und wird auch bezeichnet als "Sensorlänge", "Querrichtung", "Scannerbreite", "Bildbreite".

Die in der Regel senkrecht aufeinanderstehenden X- und Y-Achsen spannen die abzutastende Scanebene (XY-Ebene) auf. Eine Vorlage kann parallel zur Scanbene abgetastet werden. Achsen sind Vorrichtungen, die die Scanebene auf mechanischer oder elektronischer Weise translatorisch, rotatorisch oder translatorisch und rotatorisch optisch oder z.B. magnetisch abtasten.

Scanebene oder Fokusebene ist die Ebene in der sich das abzubildende Objekt befindet, wenn es von dem Bilderfassungsgerät scharf abgebildet werden soll. Bevorzugt liegt die Scanebene oder Fokusebene kongruent mit der Oberfläche der transparenten Ebene des Flachbettscanners, d.h. z.B. auf der Oberfläche der Glasscheibe oder Glasplatte. Für eine scharfe Abbildung gibt es bekanntermaßen Toleranzen bezüglich der Position des abzubildenden Objektes. Bilderfassungseinheiten können in einem Bereich der sog. Tiefenschärfe abzubildende Objekte scharf abbilden. Den enggefassten, formalen Begriff der theoretischen Scan- oder Fokusebene versteht der Fachmann daher in der Praxis gleichbedeutend mit einem Scan- oder Fokusbereich, dessen Mitte durch die theoretische Scan- oder Fokusebene vorgegeben ist, während die Ausdehnung des Scan- oder Fokusbereiches sich aus der Tiefenschärfe ergibt

Flachbettscanner mit veränderlicher Fokusebene verfügen über eine weitere Achse (Z-Richtung), um beispielsweise eine automatische Fokuseinstellung auf einer Fläche in der XY-Ebene durchzuführen. Die Abtasteinheit wird hier in der Regel senkrecht zur XY-Ebene verfahren. Weiter sind Achsen Vorrichtungen, die senkrecht zur Scanebene auf mechanischer oder elektronischer Weise translatorisch, rotatorisch oder translatorisch und rotatorisch optisch oder z. B. magnetisch die Fokusebene ändern.

Abtasteinheiten, abzutastende Vorlagen oder beide Systeme können in beliebigen Bezugssystemen (z.B. Bezussystem der Vorlage oder Bezugssystem, auf dem sich die ganze Scaneinrichtung befindet) beweglich oder nicht beweglich ausgeführt sein.

2. Der Flachbettscanner nach 1, wobei die Platte eine Glas- oder Kunststoffplatte ist.

3. Der Flachbettscanner nach einem von 1 oder 2, wobei in die Öffnung eine Haltevorrichtung (Adapter) eingepasst ist.

4. Der Flachbettscanner nach irgendeinem von 1-3, bevorzugt nach 3, wobei (i) die Öffnung oder die Haltevorrichtung geeignet ist, ein dreidimensionales Objekt aufzunehmen oder zu fixieren, wobei (ii) in der Öffnung oder der Haltevorrichtung ein dreidimensionales Objekt aufgenommen oder fixiert ist.

In Ausführungsform (ii) liegen Flachbettscanner und dreidimensionales Objekt in Kombination vor. Die folgenden Ausführungsformen, insofern auf 4 rückbezogen, betreffen beide Ausführungsformen (i) und (ii).

"Aufnehmen" und "fixieren" sind im Rahmen dieser Erfindung insofern gleichwertige Begriffe, als in allen Ausführungsformen, in denen "aufnehmen" verwendet wird auch "fixieren" angedacht ist und umgekehrt.

5. Der Flachbettscanner nach 4, wobei das dreidimensionale Objekt oder mindestens ein Teil des dreidimensionalen Objektes undurchsichtig, weitgehend undurchsichtig oder opak ist.

Bei einem durchsichtigen Objekt können Gegenstände hinter oder Elemente in diesem Objekt scharf abgebildet werden. Man spricht auch von klaren bzw. transparenten Materialien. Das Objekt kann ebenso nur an manchen Stellen transparent sein, sodass nur durch diese Stellen hindurch ein Gegenstand hinter dem Objekt oder ein Element im Objekt abgebildet werden kann. Die Möglichkeit, Gegenstände durch ein Objekt hindurch oder Elemente innerhalb des Objektes abzubilden kann durch zwei Effekte vermindert werden: Zum einen kann das Objekt zwar klar bzw. transparent sein, aber eine eingeschränkte Lichtdurchlässigkeit aufweisen. Die Lichtdurchlässigkeit kann entweder als sog. optische Dichte (logarithmisch) oder als Transmission (linear) gemessen werden. In diesem Fall werden Intensität und/oder Farbspektrum des hindurchgehenden Lichtes verändert, Gegenstände hinter dem Objekt können aber prinzipiell noch scharf abgebildet werden (sofern die Lichtintensität ausreicht).

Zum anderen kann das Objekt Partikel unterschiedlicher Größe enthalten, die das hindurchgehende Licht streuen, wie beispielsweise in Milchglas. Diese Streuung führt zu einer Lichtundurchlässigkeit bzw. Trübung. Die Lichtundurchlässigkeit kann entweder als sog. Extinktion (logarithmisch) oder als Opazität (linear) gemessen werden.

Die Opazität O ist der Kehrwert der Transmission T und der Quotient aus dem einfallenden Lichtstrom $I_0$ und dem transmittierten Lichtstrom l:

$$O = 1/T = I_0/I$$

Eine Opazität von 80 bedeutet beispielsweise, dass der einfallende Lichtstrom $I_0$ 80-mal stärker ist als der transmittierte Lichtstrom; ab dieser Grenze wird beispielsweise Papier für den doppelseitigen Druck verwendet, weil das jeweils rückseitige Druckbild unter normalen Lichtbedingungen nicht mehr sichtbar ist (siehe hierzu auch Norm ISO 2471:2008-12). Die Opazität von Kleidungsstücken liegt typischerweise im Bereich von 5, die Opazität von Rauchglas beispielsweise bei 1,03.

Opak im Sinne der vorliegenden Erfindung bedeutet eine Opazität aufweisend von mehr als 100, bevorzugt von mehr als 5, mehr bevorzugt von mehr als 1,1, besonders bevorzugt von mehr als 1,05, am meisten bevorzugt von mehr als 1,03.

Undurchsichtig bzw. weitgehend undurchsichtig bedeutet, dass eine exakte Opazität zwar nicht angegeben werden kann, dass aber mit üblichen Bildaufnahmeverfahren oder mit dem menschlichen Auge entweder kein Bild oder ein kaum erkennbares Bild eines dahinterliegenden Gegenstandes dargestellt bzw. wahrgenommen werden kann.

6. Der Flachbettscanner nach 5, wobei das dreidimensionale Objekt senkrecht zur Scanfläche, d.h. in Z-Richtung, eine Dicke von mindestens 0,5 cm, mindestens 0,6 cm, mindestens, 0,7 cm, mindestens 0,8 cm, mindestens 0,9 cm, mindestens 1,0 cm, mindestens 1,1 cm, mindestens 1,2 cm, mindestens 1,3, mindestens 1,4 cm, mindestens 1,5 cm aufweist, bevorzugt mindestens 0,9 cm aufweist; das dreidimensionale Objekt ist am meisten bevorzugt zwischen 0,9 und 1,1 cm dick.

7. Der Flachbettscanner gemäß einer Ausführungsform nach einem von 1 bis 6, wobei das dreidimensionale Objekt senkrecht zur Scanebene, d.h. in Z-Richtung, eine oder mehrere Vertiefungen aufweist.

8. Der Flachbettscanner gemäß 7, wobei die Vertiefungen größer als 0,1 cm, 0,2 cm, 0,3 cm, 0,4 cm; 0,5 cm; 0,6 cm; 0,7 cm; 0,8 cm; 0,9 cm oder 1,0 cm sind.

9. Der Flachbettscanner gemäß 8, wobei am Boden der Vertiefungen abzubildende Elemente sind, bevorzugt zweidimensionale Elemente oder Teilelemente, mehr bevorzugt in XY-Richtung zweidimensionale Elemente oder Teilelemente.

Das dreidimensionale Objekt ist ein Körper mit Ausdehnung in allen drei Raumrichtungen, wobei innerhalb des Objekts mindestens ein, mindestens zwei, vorzugsweise mindestens drei abzubildende Elemente vorliegen, die in einer Ebene liegen und in die XY-Ebene des Flachbettscanners gebracht werden bzw. gebracht werden können. Mögliche dreidimensionale Objekte sind Testgefäße im Allgemeinen, Teströhrchen, jede Art von Kavitäten, Mikrotiterplatten, Riegel oder Einzelnäpfe von Mikrotiterplatten, Objekte die dreidimensionale Kavitätssysteme wie Kanäle enthalten bis hin zu mikrofluidischen Kapillarsystemen, Objekte die dreidimensionale Leiterbahnstrukturen wie mehrschichtige Platinen enthalten.

Die abzubildenden Elemente innerhalb des dreidimensionalen Objekts sind Elemente, die eine zweidimensionale oder im Rahmen der optischen Tiefenschärfe von Flachbettscannern eine wesentliche zweidimensionale Ausdehnung aufweisen. Dies können geometrische Flächen sein, z.B Kreise, Rechtecke, Dreiecke oder Vielecke. Diese geometrischen Flächen können in Unterelemente strukturiert sein. Die Elemente und Unterelemente können beispielsweise Testflächen auf einem Träger sein.

Die abzubildenden Elemente innerhalb des dreidimensionalen Objekts sind auch Elemente, die eine dreidimensionale oder im Rahmen der optischen Tiefenschärfe von Flachbettscannern eine wesentliche dreidimensionale Ausdehnung aufweisen. Die zweidimensionalen Projektionen dieser dreidimensionalen Objekte auf die Scanebene bzw. XY-Ebene entsprechen den o.g. zweidimensionalen Elementen. Die Elemente und Unterelemente können beispielsweise dreidimensionale Messräume in einem mikrofluidischen Kanalsystem sein, die zweidimensional erfasst werden.

10. Der Flachbettscanner gemäß irgendeinem von 3 bis 9, wobei das dreidimensionale Objekt eine Mikrotiterplatte mit 2x3, 3x4, 4x6, 6x8, 8x12, 16x24, 32x48 Kavitäten ist, bevorzugt eine Mikrotiterplatte der Norm ANSI-SBS.

Eine Mikrotiterplatte ist eine flache Platte mit mehreren "Vertiefungen" bzw. "Kavitäten" bzw. "Näpfen", die als kleine Teströhrchen verwendet werden. Die Vertiefungen können entweder kreisförmig oder quadratisch sein. Die Mikrotiterplatte ist ein Standardwerkzeug in Laboratorien für analytische Forschung und klinische Diagnosetests. Eine Mikrotiterplatte hat typischerweise 6, 12, 24, 48, 96, 384 oder 1536 Probenvertiefungen, die in einer 2: 3 rechteckigen Matrix angeordnet sind. Es gibt sogar spezielle Mikroplatten mit 3456 oder 9600 Vertiefungen.

Jede Vertiefung einer Mikrotiterplatte besitzt typischerweise ein Volumen zwischen einigen zehn Nanolitern bis zu mehreren Millilitern.

Mikrotiterplatten werden aus einer Vielzahl von Materialien hergestellt, am häufigsten aus Polystyrol. Dieses Polystyrol kann gefärbt werden, beispielsweise Weiß durch Zugabe von Titandioxid für optische Absorption oder Lumineszenzdetektion oder Schwarz durch die Zugabe von Kohlenstoff für Fluoreszenzdetektion. Polypropylen wird für Mikrotiterplatten verwendet, die großen Temperaturschwankungen unterliegen und es bindet Proteine weniger stark als Polystyrol. Polycarbonat ist besonders preiswert, leicht zu formen und wurde z.B. für Einwegmikrotiterplatten für Polymerasekettenreaktionen (PCR) verwendet. Cycloolefine werden verwendet, wenn besondere optische Transparenz/ Transmission erforderlich ist, z.B. für ultraviolettes Licht. Es gibt auch Mikrotiterplatten, die aus massiven Glas- und Quarzstücken für spezielle Anwendungen hergestellt werden.

Manche Mikrotiterplatten bestehen aus mehreren Komponenten, die separat geformt und später zu einem fertigen Produkt montiert werden. Die Mikrotiterplatte wird dann beispielsweise aus zwölf getrennten Streifen mit jeweils acht Vertiefungen zusammengesetzt. Dies ermöglicht es dem Endanwender, eine Platte bei Bedarf nur teilweise zu verwenden.

Die Begriffe "Mikrotiterplatte" und "Mikroplatte" sind aus technischer Sicht gleichzusetzen. "Mikrotiter" ist in den Vereinigten Staaten von Amerika ein eingetragenes Warenzeichen der Cooke Engineering Company/ Thermo Electron (US-Trademark 72,128,338).

11. Der Flachbettscanner gemäß 10, wobei die Halterung so angebracht ist, dass die abzubildenden Elemente in der Fokusebene des Flachbettscanners liegen, mit einer Toleranz von +/- 2mm, bevorzugt mit einer Toleranz von +/- 1 mm.

12. Der Flachbettscanner gemäß irgendeinem von 1 bis 11, wobei die Halterung geeignet ist, das dreidimensionale Objekt in Z-Richtung zu bewegen.

Z-Richtung ist die Richtung orthogonal zur Fokalebene bzw. Scanebene bzw. XY-Ebene des Flachbettscanners.

13. Der Flachbettscanner gemäß irgendeinem von 1 bis 11, wobei die Halterung nicht geeignet ist, das dreidimensionale Objekt in Z-Richtung zu bewegen.

14. Der Flachbettscanner gemäß irgendeinem der Ansprüche 1 bis 13, wobei der Flachbettscanner ein CCD-Flachbettscanner oder ein CIS-Flachbettscanner ist.

15. Der Flachbettscanner gemäß irgendeinem von 1 bis 14, verbunden mit einer bildbearbeitenden Einheit.

Ein Pixel oder Bildpunkt wird durch eine oder mehrere Zahlen beschrieben. Beispielsweise können Informationen aus diesen Zahlen direkt entnommen werden (z.B. Farbkanäle RGB oder Graustufen auf Bildschrim oder Drucker) oder Informationen aus einem aus den Zahlen zu entnehmenden Speicherbereich entnommen werden. Ein Bild besteht aus mindestens einem Pixel oder kann 1-dimensional sein (Reihe von mehreren Pixeln), oder kann 2-dimensional sein (Reihen und mehrere Zeilen von Pixeln), oder kann 3-dimensional sein (Reihen, Zeilen und mehrere Ebenen), z.B. mehrere 2-dimensionale Bilder in jeweils einer Ebene (1. Ebene. Leerbild, 2. Ebene: Bild des prozessierten Trägers) oder kann n-dimensional sein. Die Anordnung der Pixel innerhalb der Dimensionen gibt in der Regel eine Information zum Ort des Bildpunktes bei der Ausgabe des Bildes an. Ein Bild kann in einer oder mehreren Dimensionen aus einer zeitlichen Dimension bestehen (ähnlich oder exakt wie ein Video bzw. Film). Zum Beispiel ändert sich das Bild während der Prozessierung (vor und nach Prozessierung eingeschlossen).

Eine bildbearbeitende Einheit ist bevorzugt ein Computer mit einer darauf installierten Software, die eine Bildbearbeitung beinhaltet. Eine Bildbearbeitung ist eine Änderung von Informationen innerhalb des zu bearbeitenden Bildes, unabhängig davon, ob dabei Informationen hinzugefügt oder entfernt werden oder die Informationsmenge identisch bleibt. Beispielhaft wird jedem Pixel aufgrund Informationen aus einem anderen Bild aus gleicher oder anderer Position eine oder mehrere neue Zahlen zugewiesen. Weiter kann jedem Pixel aufgrund Informationen aus einem anderen Bild aus gleicher oder anderer Position und aus dem eigenen Bild aus gleicher oder anderer Position eine oder mehrere neue Zahlen zugewiesen werden. Weiter kann jedem Pixel aufgrund Informationen aus dem eigenen Bild aus gleicher oder anderer Position eine oder mehrere neue Zahlen zugewiesen werden.

Wenn beispielsweise ein Bild invertiert wird, wird jedem Pixel aufgrund Informationen aus dem eigenen Bild aus gleicher Position eine oder mehrere neue Zahlen zugewiesen (1-x). Wenn beispielsweise ein Min-Filter angewendet wird, wird jedem Pixel aufgrund Informationen aus dem eigenen Bild innerhalb eines Umkreises oder ähnlich mit bestimmten Radius oder ähnlich um die gleiche Position die kleinsten Zahlen zugewiesen. Wird beispielsweise eine Multiplikation durchgeführt, wird jedem Pixel aufgrund Informationen aus dem eigenen Bild und aus einem anderen Bild aus gleicher Position eine oder mehrere neue Zahlen zugewiesen (A*B).

16. Der Flachbettscanner gemäß 15, wobei die bildbearbeitende Einheit störende optische Effekte mittels elektronischer Datenverarbeitung korrigieren kann.

Störende optische Effekte sind vorzugsweise Abbildungsfehler, die durch die Oberflächenbeschaffenheit des dreidimensionalen Objekts in Richtung der vom Scanner kommenden Beleuchtung auftritt. In Tiefen und/oder Vertiefungen des Objekts können beispielsweise Verschattungen durch benachbarte Ränder auftreten.

"Elektronische Datenverarbeitung" umfasst eine Software, die eine Bildbearbeitung beinhaltet.

17. Der Flachbettscanner gemäß 15 oder 16, wobei die störenden optischen Effekte durch Verschattungen auf einer Mikrotiterplatte auftreten, oder durch Verzerrungen der optischen Aufnahme einer Mikrotiterplatte auftreten.

18. Der Flachbettscanner nach irgendeinem von 15 bis 17, wobei die Korrektur der optischen Effekte durch Aufnahme eines Referenzbildes mit einem Referenzobjekt erfolgt, vorzugsweise mit einer Mikrotiterplatte mit visualisierten Testflächen.

Ein Referenzbild ist ein Vergleichsbild, das vor Aufnahme des dreidimensionalen Objekts im Flachbettscanner aufgenommen wird. Hierbei werden vorzugsweise die gleichen Aufnahmebedingungen gewählt, d.h. eine oder mehrere gleiche Bedingungen von beispielsweise Beleuchtungsmodus, Auflösung, Bildbearbeitung.

Ein Referenzbild enthält alle oder Teile der benötigten Informationen, wie z.B. Aufhellungen und Abschattungen, um Fehler aus dem Bild des prozessierten Trägers durch automatische, manuelle, oder halbautomatische Datenverarbeitung oder Bildbearbeitung, ganz oder teilweise zu entfernen. Ein Referenzbild kann unter gleichen, ähnlichen oder anderen Umgebungsbedingungen aufgenommen oder erstellt werden, wie das Bild des prozessierten Trägers. Ein Referenzbild kann ganz oder teilweise aus den Informationen des Bildes des prozessierten Trägers bestehen und somit ganz oder zum Teil synthetisch sein. Ein Referenzbild kann ganz oder teilweise mittels Bildbearbeitung verändert sein.

Ein Referenzobjekt ist ein Objekt, das abgesehen von den abzubildenden Elementen des dreidimensionalen Objekts von seiner Oberflächenbeschaffenheit, Form und Farbe vergleichbar mit dem dreidimensionalen Objekt ist. Ein Referenzobjekt besitzt gleiche oder ähnliche für den Aufnahmeprozess relevante Eigenschaften, wie die des Objektes, welches die abzubildenden Elemente enthält.

Ein Referenzobjekt ist optional das Objekt selbst, welches die abzubildenden Elemente nach der Prozessierung enthält.

Ein Referenzobjekt kann - ohne Begrenzung hierauf - aus Kunststoff, Glas, Aluminium oder anderen Metallen oder einer Kombination aus verschiedenen Werkstoffen, einklappbar, steckbar, zerlegbar oder verschraubbarer Form gefertigt sein.

Bevorzugt erfolgt die Korrektur der optischen Effekte durch Aufnahme eines Referenzbildes mit dem später auszuwertenden dreidimensionalen Objekt selbst, vorzugsweise mit dem Bild derselben Mikrotiterplatte, d.h. vor der Prozessierung mit einer Probe bzw. ohne die abzubildenden Elemente, z.B. ohne durch die Prozessierung mit einer Probe visualisierten Testflächen.

19. Der Flachbettscanner nach einem von 15-17, wobei die Korrektur der optischen Effekte nicht durch ein Referenzbild erfolgt.

20. Der Flachbettscanner nach 19, wobei die Information für die Korrektur aus dem zu analysierenden Bild selbst entnommen wird.

21. Der Flachbettscanner nach 19, wobei die Information für die Korrektur im Rahmen der elektronischen Datenverarbeitung hinterlegt ist, vorzugsweise in Form einer Datenbank, die Informationen aus mehreren Referenzobjekten enthält.

22. Der Flachbettscanner nach einem von 1 bis 21, wobei die Haltevorrichtung über einen Adapter für einen Halterahmen auf der Platte der Scanfläche des Flachbettscanners fixiert wird.

Ein Adapter ist eine mechanische Einheit, die in die Öffnung des Flachbettscanners eingepasst werden kann und das dreidimensionale Objekt fixiert. Ein Adapter ist auch eine Vorrichtung zum Fixieren eines Objektes an einer vorgegebenen Position z.B. durch Formschluss oder durch Einspannen. Die vorgegebene Position kann selber fixiert oder ortsveränderlich implementiert sein.

Ein Adapter kann - ohne Begrenzung hierauf - aus Kunststoff, Aluminium oder anderen Metallen oder einer Kombination aus verschiedenen Werkstoffen, einklappbar, steckbar, zerlegbar oder in verschraubbarer Form gefertigt sein.

Vorzugsweise ist der Adapter ein Halterahmen, mit dem eine Mikrotiterplatte bzw. der Halterahmen einer Mikrotiterplatte ausgerichtet und fixiert werden kann, besonders bevorzugt dergestalt, dass die Öffnungen Mikrotiterplatten-Kavitäten nach unten weisen.

23.Der Flachbettscanner gemäß irgendeinem von 1 bis 22, wobei die Öffnung eine Fläche von mindestens 5 cm$^2$, mindestens 10 cm$^2$, mindestens 20 cm$^2$, mindestens 50 cm$^2$, mindestens 100 cm$^2$ aufweist.

24. Der Flachbettscanner gemäß 23, wobei die Fläche der Öffnung die Fläche einer 96well Mikrotiterplatte ist oder die Fläche eines einzelnen Riegels einer Mikrotiterplatte ist.

Die Fläche einer 96 well Mikrotiterplatte ist: 127,76 mm $\times$ 85,48 mm bzw.ca. 109 cm$^2$; die Fläche eines einzelnen Riegels ist: 9 mm x 85,48 mm bzw. ca. 8 cm$^2$. (ca. bedeutet +- 5%).

25. Der Flachbettscanner gemäß irgendeinem von 1 bis 24, wobei die Öffnung in einer Dimension, vorzugsweise in X-Richtung bzw. Vorschubrichtung, mindestens 1 cm, mindestens 2 cm, mindestens 4 cm, mindestens 8 cm, mindestens 12 cm, lang ist.

26. Die Verwendung des Flachbettscanners gemäß irgendeinem von 1 bis 25 zum Abbilden von Elementen innerhalb eines dreidimensionalen Objekts, bevorzugt zum Abbilden von zweidimensionalen Elementen in Mikrotiterplatten, mehr bevorzugt zum Auslesen von Mikrotiterplatten, am meisten bevorzugt zum Auslesen von Tests, die infolge von Flüssigkeits-Festphasen-Interaktionen zu Veränderungen auf einer Oberfläche in der Mikrotiterplatte führen. Die Testobjekte können z.B. visualisiert werden durch die folgenden Schritte

a) Wechselwirkung zwischen einer Probe und einer auf der Testfläche immobilisierten Fängersubstanz

b) Inkontaktbringen der Testfläche mit einem sekundären Nachweismolekül

c) Inkontaktbringen der Testfläche mit einem Entwicklungsmittel, das in ein detektierbares Produkt umgewandelt wird und damit die Testfläche visualisiert.

27. Verwendung eines Flachbettscanners zum Abbilden von Elementen innerhalb eines dreidimensionalen Objekts, wobei die Scanfläche innerhalb des Flachbettscanners manipuliert wird, vorzugsweise mit einer Öffnung und optional in der Öffnung mit einer Vertiefung versehen wird.
In dieser Ausführungsform wird vorzugsweise mindestens eine Öffnung in die Glasplatte eines herkömmlichen oder kommerziell verfügbaren Flachbettscanners eingebracht, z.B. durch Aussägen, Ausschneiden oder Wegätzen.
In einer weiteren Ausführungsform besitzt Scanfläche des Flachbettscanners mehrere Positionen, auf denen ein dreidimensionales Objekt ausgerichtet werden kann. Dies gelingt beispielsweise durch mehrere Öffnungen in der Glasplatte des Flachbettscanners und/oder durch mehrere Positionen innerhalb eines Flachbettscanners mit Adapter gemäß 22. Auf diese Weise können zum einen mehrere dreidimensionale Objekte in einem Scanvorgang erfasst werden. Zum anderen ist es ebenso möglich, dasselbe dreidimensionale Objekt mehrfach zu erfassen, beispielsweise aus unterschiedlichen Blickwinkeln (vgl. Abb. 3). In dem Fall, dass das dreidimensionale Objekt größer ist als die Scanfläche, könnte das Objekt mehrfach positioniert und gescannt werden, wobei es zwischen den Scans schrittweise verschoben wird.

28. Verfahren zum Herstellen eines Flachbettscanners gemäß einem der Ansprüche 1 bis 26, wobei in die Scanfläche eines Flachbettscanners eine Öffnung, bevorzugt die Haltevorrichtung eingebracht wird, und mehr bevorzugt das dreidimensionale Objekt eingebracht wird.

29. Verfahren zum Auslesen eines dreidimensionalen Objekts, bevorzugt eines optischen Tests, der in einem dreidimensionalen Objekt durchgeführt wird, wobei das dreidimensionale Objekt bevorzugt undurchsichtig, weniger durchsichtig oder opak ist, wobei das dreidimensionale Objekt in die Öffnung des Flachbettscanners gemäß irgendeinem von 1-26 eingebracht wird und die auszulesenden Elemente im Reflexionsmodus abgebildet werden.
Im Rahmen der Ausführungsformen dieser Erfindung steht das dreidimensionale Objekt bevorzugt auf dem Kopf, weist mehr bevorzugt verschiedene Ebenen in verschiedenen Tiefen in Z-Richtung auf, wobei in gleichen Ebenen abzubildende Elemente liegen. Bevorzugt liegen diese abzubildenden Elemente am Boden der Vertiefung einer Mikrotiterplatte.

30. Das Verfahren von 29, wobei sich ein oder mehrere abzubildende Elemente am Boden einer Mikrotiterplattenkavität befinden, vorzugsweise im Inneren einer Mikrotiterplattenkavität befinden, mehr bevorzugt sich im Wesentlichen in der Fokusebene bzw. im Fokusbereich des Scanners befinden, wobei am meisten bevorzugt die Mikrotiterplatte mit der geöffneten Seite der Kavitäten nach unten in die Öffnung des Flachbettscanners eingebracht wird.

31. Ein Verfahren zum Auslesen eines dreidimensionalen Objekts, bevorzugt eines optischen Trägers, vorzugsweise einer Mikrotiterplatte, umfassend folgenden Schritt:

Abbilden eines oder mehrerer Elemente in einer Vertiefung des dreidimensionalen Objekts, bzw. der Mikrotiterplatte, bevorzugt am Boden einer Mikrotiterplattenkavität mit Hilfe des Flachbettscanners,

wobei das dreidimensionale Objekt, bevorzugt die Mikrotiterplatte, so in den Flachbettscanner eingebracht ist, dass das Bild auf dem Boden einer Vertiefung des Objekts bzw. der Mikrotiterplatte bzw. einer Kavität in der Fokusebene bzw. im Fokusbereich des Scanners liegt,

wobei mehr bevorzugt die Mikrotiterplatte im Reflexionsmodus ausgelesen wird.

In allen Ausführungsformen der Erfindung ist angedacht, dass das dreidimensionale Objekt optional in Z-Richtung justiert werden kann. Justieren meint hierbei, dass eine gewünschte Z-Position des dreidimensionalen Objektes gewählt und beibehalten werden kann.

Ebenso ist es in allen Ausführungsformen der Erfindung angedacht, dass das dreidimensionale Objekt unabhängig von den Achsen des Scanners verfahren, gedreht, geneigt oder ganz allgemein translatiert und/oder rotiert werden kann. Beispielsweise könnte ein Objekt einmal gescannt, danach um 180° gedreht und nochmals gescannt werden. Weiterhin könnten beispielsweise mehrere Mikrotiterplatten automatisiert nacheinander in den Flachbettscanner eingebracht werden, wobei unterschiedlichste Magazinsysteme und Greifer zum Einsatz kommen können. In einem anderen Beispiel könnte an einer Position ein Referenzobjekt in den Flachbettscanner eingebracht werden und an einer anderen Position ein auszulesendes Objekt.

32. Das Verfahren gemäß irgendeinem von 29-31, wobei ein digitales Bild durch eine entsprechende elektronische Datenverarbeitung, die mit dem Scanner in Verbindung steht, aufbereitet wird, wobei bevorzugt störende optische Effekte, die sich aus der spezifischen Flachbettscanner-Optik und der Mikrotiterplattenoberfläche ergeben, mittels elektronischer Datenverarbeitung korrigiert werden.

33. Das Verfahren gemäß 26 oder 27, wobei das Abbild quantitativ analysiert werden kann, bevorzugt ein digitales Bild ist, mehr bevorzugt geeignet ist, den auf der Mikrotiterplatte durchgeführten Test auszulesen, mehr bevorzugt quantitativ auszulesen, am meisten bevorzugt vollautomatisch ohne weitere manuelle Korrektur des Benutzers auszulesen, am meisten bevorzugt, vollautomatisch ohne weitere Korrektur des Benutzers auszulesen.

## Beschreibung der Figuren

**Abb. 1a:** Schematische Darstellung einer Mikrotiterplatte bzw. Mikroplatte mit 8 x 12 Kavitäten, wobei jeweils 8 Kavitäten miteinander verbunden sind und einen Riegel bilden. Die Verbindung zwischen diesen 8 Kavitäten ist so gestaltet, dass der Riegel leicht brechbar ist und somit in Stücke von einem bis 7 Näpfen geteilt werden kann.

**Abb. 1b:** Standard Mikrotiterplatte nach ANSI_SBS_1-2004 ("Footprint Dimensions"). http://www.slas.org/resources/information/industry-standards/

**Abb. 1c:** Standard Mikrotiterplatte nach ANSI_SBS_2-2004 ("Height Dimensions"). http://www.slas.org/resources/information/industry-standards/

**Abb. 1d:** Einzelne Mikrotiterplatten-Kavitäten mit Öffnung (1) nach oben weisend. Die Schnittansicht zeigt die Wände (2) der einzelnen Kavitäten sowie pro Kavität jeweils einen Träger (4) am Boden (3) der Kavität.

**Abb. 2a:** Einzelne Mikrotiterplatten-Kavitäten mit Öffnung (1) nach oben weisend. Die Schnittansicht zeigt die Wände (2) der einzelnen Kavitäten sowie pro Kavität jeweils einen Träger (4) am Boden (3) der Kavität, wobei sowohl Boden (3) als auch Träger (4) transparent sind. Wird diese Anordnung auf die Glasplatte eine Flachbettscanners gestellt, so befindet sich die Unterseite des Bodens (3) in der Fokusebene (FE) des Flachbettscanners. Der Träger (4) stellt die Bildebene (BE) dar, in der sich die Bildinformation befindet, die vom Flachbettscanner erfasst werden soll. Die Bildebene (BE) liegt somit oberhalb der Fokusebene (FE). Abhängig von Typ und Ausführungsform des Flachbettscanners liegt diese Bildebene (BE) im Fokusbereich bzw. Tiefenschärfebereich des Flachbettscanners oder nicht.

**Abb. 2b:** Einzelne Mikrotiterplatten-Kavitäten mit Öffnung (1) nach unten weisend. Die Schnittansicht zeigt die Wände (2) der einzelnen Kavitäten sowie pro Kavität jeweils einen Träger (4) am Boden (3) der Kavität, wobei Boden (3) und/oder Träger (4) nicht-transparent, im Wesentlichen nicht-transparent bzw. opak sind. Wird diese Anordnung auf die Glasplatte eine Flachbettscanners gestellt, so befindet sich die Oberseite bzw. Öffnung der Kavitäten in der Fokusebene (FE) des Flachbettscanners. Der Träger (4) stellt die Bildebene (BE) dar, in der sich die Bildinformation befindet, die vom Flachbettscanner erfasst werden soll. Die Bildebene (BE) liegt somit deutlich oberhalb der Fokusebene (FE). Diese Bildebene (BE) liegt weit außerhalb des Fokusbereiches bzw. Tiefenschärfebereiches eines Flachbettscanners, sodass handelsübliche Scanner kein scharfes Bild des Trägers am Boden der Kavität aufnehmen können.

**Abb. 3:** Bildaufnahme von der Öffnungsseite der Mikrotiterplattenkavität her hinein in die Kavitäten, mit Aufsicht auf die Wände (2) der Kavitäten und auf den Träger (4) mit den Testflächen am Boden (3) der Kavitäten. Bei Verwendung einer klassischen Sammellinse in einem CCD-basierten Flachbettscanner wird nur die Mitte des Scanbereiches als unverzerrte 90°-Aufsicht abgebildet (Mitte), während mit zunehmendem Abstand von der Mitte (in Richtung der Sensorlänge bzw. Scannerbreite) eine Ansicht mit immer stärker verändertem Blickwinkel resultiert. Dies führt dazu, dass Teile des Bodens der Mikrotiterplattenkavität nicht erfasst werden und stattdessen Teile der Wände der Mikrotiterplattenkavität abgebildet werden (rechts bzw. links). Einige Testflächen auf dem Träger am Boden der Mikrotiterplattenkavität können dann nicht mehr erfasst und ausgewertet werden

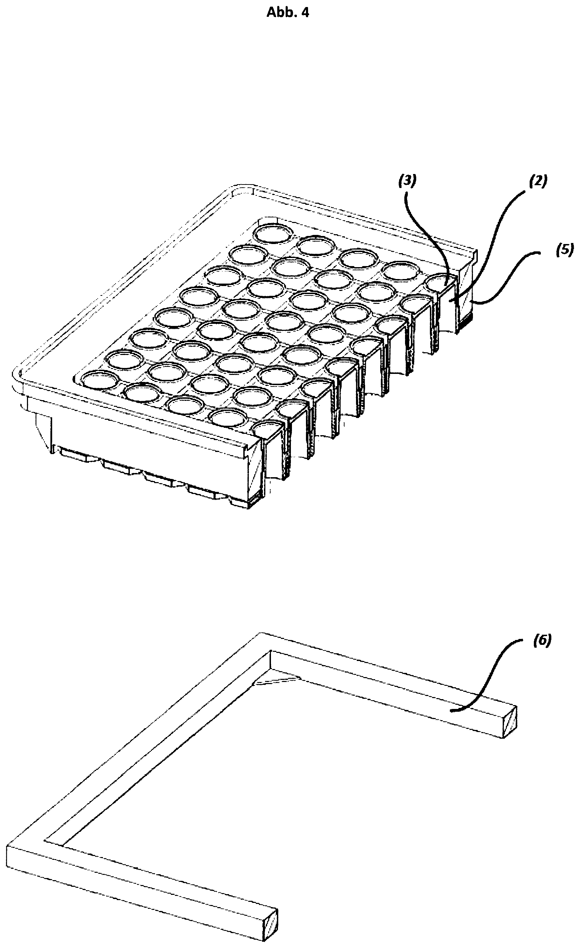

**Abb. 4:** Ausschnittsdarstellung einer Mikrotiterplatte mit den Öffnungen ihrer Kavitäten nach unten weisend und Boden (3) der Kavitäten nach oben weisend. Der Schnitt zeigt die Wände (2) der Kavitäten. Die Kavitäten werden gehalten durch den Mikrotiterplatten-Halterahmen (5). Darunter als Ausschnittdarstellung der Adapter (6) für den Mikrotiterplatten-Halterahmen (5), mit dem die Mikrotiterplatte in der gezeigten Anordnung auf bzw. in einem Flachbettscanner definiert angeordnet werden kann.

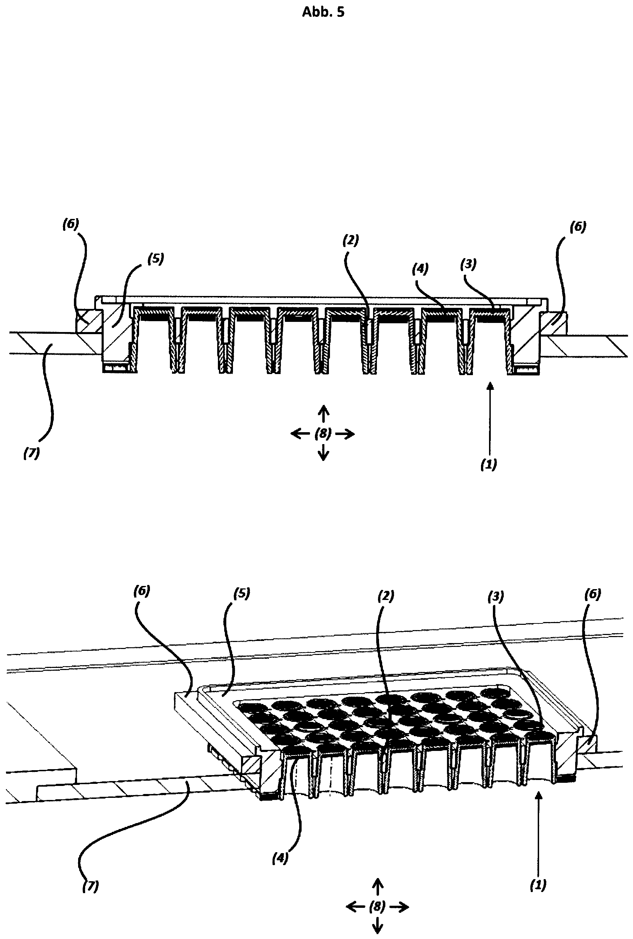

**Abb. 5: oben:** Seitenansicht eines Riegels aus 8 Mikrotiterplatten-Kavitäten mit Öffnung (1) nach unten weisend. Die Schnittansicht zeigt die Wände (2) der einzelnen Kavitäten sowie pro Kavität jeweils einen Träger (4) am Boden (3) der Kavität, wobei Boden (3) und/oder Träger (4) nicht-transparent, im Wesentlichen nicht-transparent bzw. opak sind. Die Kavitäten sind in einem Halterahmen (5) angeordnet der wiederum im Ganzen über einen Adapter (6) in eine Öffnung in der Glasplatte (7) des Scanners eingebracht wird. Je nach Gestaltung des Adapters (6) können die Träger (4) am Boden (3) der Kavitäten innerhalb des Fokusbereiches des Flachbettscanners positioniert werden, so dass zum einen die Bildebene der Träger (4) scharf abgebildet werden kann und zum anderen Störungen der Scanneroptik minimiert werden, die beispielsweise resultieren können wenn die Wände (2) der Kavitäten zu weit in den Innenraum (8) des Scanners hineinragen.

**Unten:** Perspektivische Darstellung desselben Sachverhaltes für mehrere Riegel in einem Halterahmen, Schnittansicht.

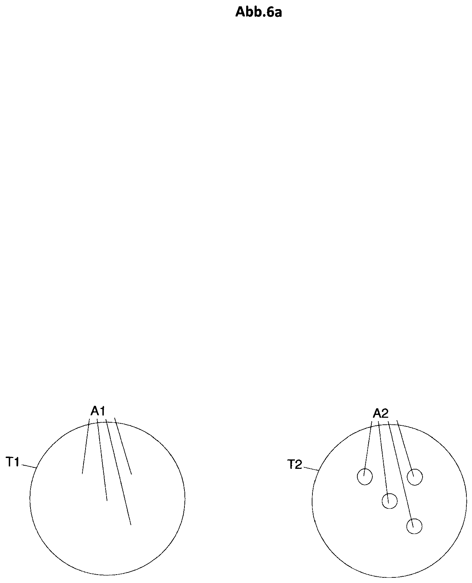

**Abb.6a:** Träger vor Prozessierung (T1) mit Testflächen (A1) (links): die Testflächen (A1) zeigen kein detektierbares Signal. Träger nach Prozessierung (T2) mit Testflächen (rechts): die Testflächen (A2) zeigen visualisierte, detektierbare Signale. Die idealisierte Bildaufnahme zeigt keine Störungen.

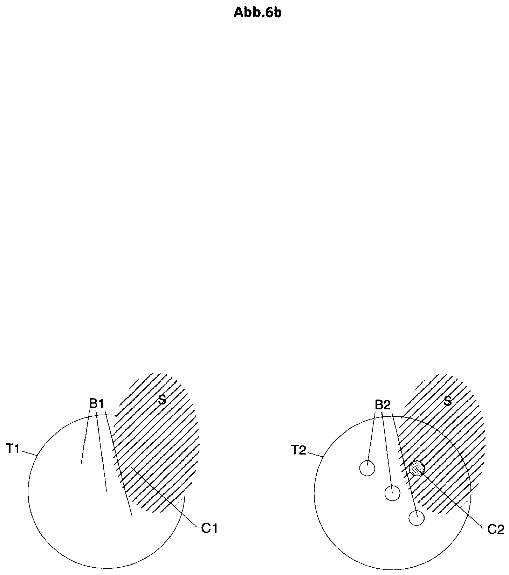

**Abb.6b:** Träger vor Prozessierung (T1) mit Testflächen (links): die Testflächen B1 und C1 zeigen kein detektierbares Signal. Träger nach Prozessierung (T2) mit Testflächen (rechts): die Testflächen B2 und C2 zeigen visualisierte, detektierbare Signale. Aufgrund der speziellen Scanner-Anordnung ist der Träger T1 bzw. T2 nicht gleichmässig beleuchtet. Die Bildaufnahme zeigt beispielhaft schematisch dargestellt eine teilweise Abschattung (S) des Trägers T1 bzw. T2, die die Testfläche C1 bzw. C2 in ihrer Helligkeit verfälscht, die drei übrigen Testflächen B1 bzw. B2 dagegen nicht beeinträchtigt.

**Detaillierte Beschreibung der Erfindung**

Eine bevorzugte Ausführungsform der vorliegenden Erfindung betrifft ein Verfahren zur Visualisierung und digitalen Analyse von Probeninteraktionen mit einem Träger. Das Verfahren umfasst folgende Schritte:

(1) Wechselwirkung zwischen einer Probe und einem Träger, der Fängersubstanzen umfasst, die in einem zweidimensionalen und adressierbaren Muster räumlich begrenzter Testflächen auf einem opaken Träger immobilisiert sind, wobei sich der Träger am Boden einer Mikrotiterplattenkavität befindet;

(2) Inkontaktbringen des Trägers mit einem sekundären Nachweismolekül, ausgewählt aus einer Gruppe, die ein Enzym umfasst;

(3) Inkontaktbringen des Trägers mit einem Entwicklungsmittel, ausgewählt aus einer Gruppe, die eine Substanz umfasst, die mit Hilfe des Enzyms in ein detektierbares Produkt umgewandelt wird;

(4) Digitalisierung eines durch das detektierbare Produkt erzeugten Bildes auf einem opaken Träger (abzubildendes Element) am Boden einer Mikrotiterplattenkavität (dreidimensionales Objekt) mit Hilfe eines Flachbettscanners, wobei die Mikrotiterplattenkavität so in den Flachbettscanner eingebracht wird, dass das Bild auf dem Träger am Boden der Kavität bzw. das abzubildende Element im Wesentlichen in die Fokusebene des Scanners gebracht werden kann und wobei die Fokusebene vorzugsweise selbsttätig durch den Scanner feinjustiert wird.

(5) Aufbereitung des digitalen Bildes, wobei insbesondere störende optische Effekte mittels elektronischer Datenverarbeitung korrigiert werden.

(6) Analyse des korrigierten digitalen Bildes, welches mit der Wechselwirkung zwischen Probe und Fängersubstanzen auf dem Träger korreliert.

In einer weiteren Ausführungsform werden die Mikrotiterplattenkavitäten in den Flachbettscannern, Verwendungen oder Verfahren der Erfindung derart mittig (in Bezug auf die Sensorlänge bzw. Scannerbreite bzw. Y-Richtung) in dem Flachbettscanner positioniert, dass die Träger am Boden der Kavitäten nicht wie in Abb.3 beschrieben teilweise verdeckt werden. Es wird vermieden, die Träger bzw. Mikrotiterplattenkavitäten am Rand der Scanfläche (in Bezug auf die Sensorlänge bzw. Scannerbreite bzw. Y-Richtung) zu positionieren.

In einer weiteren Ausführungsform der erfindungsgemäßen Verfahren wird der Träger gewaschen nach Wechselwirkung mit der Probe und/oder nach Inkontaktbringen mit dem sekundären Detektormolekül und/oder nach Inkontaktbringen mit dem Entwicklungsmittel.

Vorzugsweise wird der Träger am Boden der Mikrotiterplattenkavität getrocknet, bevor das Bild mittels Flachbettscanner digitalisiert wird.

Vorzugsweise ist das detektierbare Produkt ein kolorimetrisches Präzipitat. In einer bevorzugten Ausführungsform des vorliegenden Verfahrens ist das Enzym alkalische Phosphatase. Ebenso ist das Entwicklungsmittel vorzugsweise 5-Brom-4-chlor-3-indoxylphosphat (BCIP) / Nitro-Blau-Tetrazolium NBT.

In einer weiteren bevorzugten Ausführungsform der Flachbettscanner, Verfahren oder Verwendungen der Erfindung weist die Glasplatte der Scanfläche des Flachbettscanners mindestens eine Öffnung mit oder ohne Haltevorrichtung auf, in die eine Mikrotiterplatte eingelegt werden kann.

In einer besonders bevorzugten Ausführungsform der Flachbettscanner, Verfahren oder Verwendungen der Erfindung wird die Mikrotiterplatte hierbei so in die Öffnung der Scanfläche eingelegt, dass die Öffnungen der Mikrotiterplattenkavitäten nach unten weisen, sodass das mit Hilfe des detektierbaren Produktes auf einem opaken Träger am Boden einer Mikrotiterplattenkavität erzeugte Bild der Testflächen in Richtung der Scanner-Optik weist.

In einer ganz besonders bevorzugten Ausführungsform der Flachbettscanner, Verfahren oder Verwendungen der Erfindung wird die Mikrotiterplatte hierbei so in die Öffnung der Scanfläche eingelegt, dass das mit Hilfe des detektierbaren Produktes auf einem opaken Träger am Boden einer Mikrotiterplattenkavität erzeugte Bild in Richtung des Scanners weist und im Wesentlichen in der Fokusebene des Scanners liegt.

In einer weiteren bevorzugten Ausführungsform der Flachbettscanner, Verfahren oder Verwendungen der Erfindung wird das mit Hilfe der abzubildenden Elemente auf einem opaken Träger am Boden einer Mikrotiterplattenkavität erzeugte Bild, welches im Wesentlichen in der Fokusebene des Scanners liegt automatisch fokussiert, wobei hierzu ein Scanner mit Autofokus-Funktion verwendet wird.

In einer weiteren bevorzugten Ausführungsform wird die selbsttätige Fokussierung des Scanners nicht am Boden der Mikrotiterplattenkavität selbst ausgeführt, sondern an einer separaten Testfläche, die dieselbe Fokusebene besitzt wie der Boden der Mikrotiterplattenkavität, jedoch eine größere Fläche aufweist. Auf diese Weise können auch selbstfokussierende Scanner verwendet werden, die zur Fokussierung eine größere Fläche benötigen als den Boden einer Mikrotiterplattenkavität.

In einer weiteren bevorzugten Ausführungsform der Flachbettscanner, Verfahren oder Verwendungen der Erfindung liegt die mindestens eine Öffnung in der Glasplatte der Scanfläche des Flachbettscanners mittig (in Bezug auf die Sensorlänge bzw. Y-Richtung). Die Lage der Öffnung bezogen auf die X-Richtung bzw. Vorschubrichtung ist hierbei im Rahmen der bauseitig möglichen Dimensionen beliebig.

In einer weiteren Ausführungsform der Flachbettscanner, Verfahren oder Verwendungen der Erfindung wird mindestens eine in den Flachbettscanner eingelegte Mikrotiterplatte mit einem zusätzlichen, werkseitig nicht im Scanner enthaltenen Leuchtmittel beleuchtet.

In einer weiteren Ausführungsform der Flachbettscanner, Verfahren oder Verwendungen der Erfindung ist die Bildauflösung des Flachbettscanners so gewählt, dass eine einzelne miniaturisierte Testfläche die mit Hilfe des detektierbaren Produktes auf dem opaken Träger am Boden der Mikrotiterplattenkavität visualisiert wurde mindestens einem Bildpixel, bevorzugt 10 Bildpixeln und besonders bevorzugt 100 oder mehr Bildpixeln im Bild entspricht.

In einer weiteren bevorzugten Ausführungsform der Flachbettscanner, Verfahren oder Verwendungen der Erfindung ist die Bildauflösung des Flachbettscanners so gewählt, dass eine einzelne miniaturisierte Testfläche, die mit Hilfe des detektierbaren Produktes auf dem opaken Träger am Boden der Mikrotiterplattenkavität visualisiert wurde, in ihrer kürzesten Dimension mindestens einem Bildpixel, bevorzugt 5 Bildpixeln und besonders bevorzugt 10 oder mehr Bildpixeln im Bild entspricht.

In einer weiteren Ausführungsform der Flachbettscanner, Verfahren oder Verwendungen der Erfindung werden die Helligkeitswerte jedes Bildpunktes (ist gleich Pixel) des primären digital aufgenommenen Bildes durch eine sog. Abschattungsfunktion korrigiert.

Das ideale Bild eines unprozessierten Träger weist keine visualisierten kolorimetrischen Testflächen auf und der Träger besitzt auf seiner gesamten Fläche identische Helligkeitswerte.

Das reale Bild eines unprozessierten Träger weist zwar auch keine visualisierten kolorimetrischen Testflächen auf, aber der Träger besitzt aufgrund von optischen Störeffekten an unterschiedlichen Stellen seiner Oberfläche voneinander abweichende Helligkeitswerte. Eine Abschattungsfunktion ist eine Funktion, die die Oberfläche des Trägers dergestalt transformiert, dass die Helligkeit an allen Stellen gleich wird.

In einer Ausführungsform wird das Bild des prozessierten Trägers mit visualisierten Testflächen dann mit derselben Abschattungsfunktion transformiert. Hierbei wird angenommen, dass sich die optischen Störeffekte auf die visualisierten Testflächen in gleicher Weise auswirken, wie auf die Fläche des unprozessierten Trägers.

Für das beschriebene Verfahren werden folglich zwei Bilder benötigt, nämlich von dem unprozessierten und von dem prozessierten Träger. Das Bild des unprozessierten Trägers kann entweder immer dasselbe und digital hinterlegt sein oder jeder Träger wird zunächst gescannt, bevor er prozessiert wird.

Weil der Träger erfindungsgemäß ein adressierbares Muster räumlich begrenzter Testflächen aufweist, ist bekannt an welchen Stellen des Trägers sich keine Testflächen, sondern Zwischenräume befinden. In einer weiteren Ausführungsform wird daher die Abschattungsfunktion direkt aus dem Bild des prozessierten Trägers abgeleitet. Hierbei werden die Zwischenräume zwischen den visualisierten Testflächen als Bereiche sollgleicher Helligkeit zugrundegelegt.

**Beispiele**

**Beispiel 1:** Aufnahme eines Referenzbildes zur Abschattungskorrektur

Von dem Träger vor Prozessierung T1 wird als Referenzbild ein Leerbild der Mikrotiterplattenkavität aufgenommen, das lediglich den Träger T1 der Kavität ohne visualisierte kolorimetrische Signale zeigt. Bei idealer Bildaufnahme ohne optische Störungen enthält dieses Leerbild keine visualisierten Signale und eine Abschattungskorrektur wäre nicht erforderlich (Abb. 6a, links). Treten dagegen optische Effekte aufgrund spezieller Scanner-Anordnung auf, beispielsweise teilweise Abschattung S des Trägers T1, sodass eine Testfläche C1 im Bereich der Abschattung S liegt, während beispielhaft drei andere Testflächen B1 nicht von der Abschattung S betroffen sind (Abb.6b, links), so enthält dieses Leerbild alle optischen Effekte des Gesamtsystems aus Halterahmen und Mikrotiterplattenkavitäten. Mittels elektronischer Datenverarbeitung kann die Helligkeit auf der Oberfläche des Trägers am Boden der Mikrotiterplattenkavität normalisiert werden wie folgt: für jede Bildposition im Bereich des unprozessierten Trägers T1 kann ermittelt werden, mit welcher rechnerischen Operation die Helligkeit an dieser Position so angepasst werden kann, dass die gesamte Fläche eine konstante Helligkeit aufweist. Unter der Annahme, dass diese rechnerische Operation auf die prozessierte Trägerfläche T2 übertragbar ist, kann die später prozessierte Trägerfläche T2 (Abb.6b, rechts), mit derselben rechnerischen Operation normalisiert werden. Die störenden, optischen Effekte werden auf diese Weise auch für die kolorimetrischen Signale korrigiert.

**Patentansprüche**

1. Ein Flachbettscanner, umfassend eine transparente Ebene in der Scanebene oder Fokusebene, wobei die transparente Ebene mindestens eine Aussparung aufweist.

2. Der Flachbettscanner nach Anspruch 1, wobei in die Aussparung eine Haltevorrichtung eingepasst ist.

3. Der Flachbettscanner gemäß Anspruch 1 oder 2, wobei (i) die Aussparung oder die Haltevorrichtung geeignet ist, mindestens ein dreidimensionales Objekt zu fixieren oder wobei (ii) die Aussparung oder die Haltevorrichtung mindestens ein dreidimensionales Objekt aufnimmt.

4. Der Flachbettscanner mit mindestens einem aufgenommenen dreidimensionalen Objekt gemäß Anspruch 3, wobei das dreidimensionale Objekt oder mindestens ein Teil des dreidimensionalen Objekts undurchsichtig ist.

5. Der Flachbettscanner mit mindestens einem aufgenommenen dreidimensionalen Objekt gemäß Anspruch 4, wobei das dreidimensionale Objekt senkrecht zur Scanebene, d.h. in Z-Richtung, eine Dicke von mindestens 0,5 cm aufweist.

6. Der Flachbettscanner mit mindestens einem aufgenommenen dreidimensionalen Objekt gemäß einem derAnsprü-

che 3-5, wobei das dreidimensionale Objekt senkrecht zur Scanebene, d.h. in Z-Richtung, mindestens eine Vertiefung aufweist, die größer als 0,1 cm ist.

7. Der Flachbettscanner mit mindestens einem aufgenommenen dreidimensionalen Objekt gemäß Anspruch 6, wobei am Boden der mindestens einen Vertiefung ein oder mehrere abzubildende Elemente sind.

8. Der Flachbettscanner mit mindestens einem aufgenommenen dreidimensionalen Objekt gemäß irgendeinem der Ansprüche 3 bis 7, wobei das dreidimensionale Objekt eine Mikrotiterplatte mit 2x3, 3x4, 4x6, 6x8, 8x12, 16x24 oder 32x48 Kavitäten ist.

9. Der Flachbettscanner gemäß irgendeinem der Ansprüche 3 bis 8, wobei die Halterung so angebracht ist, dass die abzubildenden Elemente in der Fokusebene des Flachbettscanners liegen, mit einer Toleranz von +/- 2mm.

10. Der Flachbettscanner gemäß irgendeinem der Ansprüche 1 bis 9, wobei die Halterung geeignet ist, das dreidimensionale Objekt in Z-Richtung zu bewegen.

11. Die Verwendung des Flachbettscanners gemäß irgendeinem der Ansprüche 1 bis 10 zum Abbilden von zweidimensionalen Elementen in Mikrotiterplatten.

12. Die Verwendung gemäß Anspruch 11, zum Auslesen von optischen Veränderungen auf einer Oberfläche in der Mikrotiterplatte.

13. Verwendung eines Flachbettscanners zum Abbilden von Elementen innerhalb eines dreidimensionalen Objekts, wobei zum Zwecke dieses Abbildens von Elementen mindestens eine Aussparung in die Glasplatte eines herkömmlichen oder kommerziell verfügbaren Flachbettscanners durch Aussägen, Ausschneiden oder Wegätzen eingebracht wird.

14. Verfahren zum Auslesen eines optischen Tests, der in einem dreidimensionalen Objekt durchgeführt wird, wobei das dreidimensionale Objekt undurchsichtig oder opak ist, das dreidimensionale Objekt in die Aussparung des Flachbettscanners gemäß irgendeinem der Ansprüche 1-10 eingebracht wird, und die abzubildenden Elemente im Reflexionsmodus abgebildet werden.

15. Das Verfahren von Anspruch 14, wobei sich ein oder mehrere abzubildende Elemente am Boden einer Mikrotiterplattenkavität befinden und sich in der Fokusebene des Scanners befinden.

**Abb. 1a**

**Abb. 1b:**

**Abb. 1c**

SECTION A-A

0.00/0.76
(.0000/.0299)

// 0.76 A
(.0299)

14.35
(.5650)
SEE NOTE A

A

1
(.0394) MIN
SEE NOTE B

Abb. 1d

**Abb. 2a**

**Abb. 2b**

**Abb. 3**

(4)

(3)

(2)

(4)

**Abb. 4**

**Abb. 5**

**Abb.6a**

**Abb.6b**

B1

S

T1

C1

B2

S

T2

C2

Europäisches
Patentamt

European
Patent Office

Office européen
des brevets

# EUROPÄISCHER RECHERCHENBERICHT

Nummer der Anmeldung

EP 17 00 1928

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ZOLTÁN GÖRÖCS ET AL: "Biomedical imaging and sensing using flatbed scanners", LAB ON A CHIP, Bd. 14, Nr. 17, 1. Januar 2014 (2014-01-01), Seiten 3248-3257, XP055440512, ISSN: 1473-0197, DOI: 10.1039/C4LC00530A * whole document, in particular abstract and figures * ----- | 1-7,9, 11-15 | INV. H04N1/04 G01N21/59 G01N21/25 |
| X | JAMES R. CAREY ET AL: "Rapid Identification of Bacteria with a Disposable Colorimetric Sensing Array", JOURNAL OF THE AMERICAN CHEMICAL SOCIETY, Bd. 133, Nr. 19, 18. Mai 2011 (2011-05-18), Seiten 7571-7576, XP055174885, ISSN: 0002-7863, DOI: 10.1021/ja201634d * Zusammenfassung * ----- | 1-7,9, 11-15 | |

RECHERCHIERTE SACHGEBIETE (IPC)

H04N
G01N

Der vorliegende Recherchenbericht wurde für alle Patentansprüche erstellt

| Recherchenort | Abschlußdatum der Recherche | Prüfer |
|---|---|---|
| München | 15. Januar 2018 | Behrens, Ralf |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0852004 A
- DE 2508115
- WO 9013963 A
- US 6072602 F
- US 6965460 B
- DE 69211776 T2
- US 5140443 A